# EUROPEAN PATENT APPLICATION

(11) **EP 2 891 967 A1**
(43) Date of publication of application: **08.07.2015**
(21) Application number: 13833187.1
(22) Date of filing: 01.08.2013
(51) Int. Cl.: G06F 3/0488, G06F 3/041, G06F 3/048, G06F 3/0481

(54) **DISPLAY CONTROL DEVICE, THIN-CLIENT SYSTEM, DISPLAY CONTROL METHOD, AND RECORDING MEDIUM**

(30) Priority: 31.08.2012 JP 2012192639
(71) Applicant: NEC Solution Innovators, Ltd., Tokyo 136-8627 (JP)
(72) Inventor: KADOMATSU, Yasuki, Tokyo 1368627 (JP)
(74) Representative: Betten & Resch
(86) International application number: PCT/JP2013/070889
(87) International publication number: WO 2014/034369

(57) **Abstract**

A display control unit (15) of a display control device (1) displays an image containing a window-operation button on a display unit (11). An operation verification unit (13) verifies the contact coordinates indicating a position contacted by a user, and the continuous-contact interval thereof. The display control unit (15) retrieves the data for the icon of a smart-window manager from a storage unit (14), and displays the same at a prescribed position on the screen of the display unit (11) so as to be superimposed on the displayed image. The display control unit (15) also identifies a window-operation button corresponding to a tapped icon by referring to correlation information expressing the correlation between the icon stored in the storage unit (14) and the window-operation button, when it is determined that the user has tapped an icon, on the basis of the contact coordinates and the continuous contact interval. The display control unit (15) also produces an event by generating event information indicating that the identified window-operation button has been operated.

## Description

### Technical Field

The present invention relates to a display control device equipped with a touch panel, a thin client system, a display control method and a recording medium.

### Background Art

Windows (registered trademark) OSs (Operating Systems) display windows on a screen of a display device for a personal computer. The window operation buttons such as the minimizing button, the maximizing button, and the close button of the windows are often appear in a corner of the windows such as the upper right or the upper left corner. Users relatively frequently use these window operation buttons.

Techniques related to the window operation buttons include PTLs 1 to 4, for example.

### Citation List

### Patent Literature

PTL 1: Japanese Laid-Open Patent Publication No. 2002-259001
PTL 2: Japanese Laid-Open Patent Publication No. 2008-166927
PTL 3: Japanese Laid-Open Patent Publication No. 2008-234687
PTL 4: Japanese Laid-Open Patent Publication No. 2012-083831

### Summary of Invention

### Technical Problem

If window operation buttons are displayed on the screen of a touch panel display, a user directly touches and manipulates one of the window operation buttons with a finger or points to and manipulates one of the window operation buttons with a cursor.

However, when the window is maximized, the window operation buttons are displayed in a corner of the touch panel display since the window operation button is typically in a corner of the window.

Accordingly, the window operation buttons have the problem of poor user operability even though they are frequently used. In addition, in a small -sized touch panel display, the window operation buttons are small, which causes a problem that a user is difficult to operate the buttons.

The techniques in PTLs 1 to 4 do not improve the operability of window operation buttons displayed on the screen of a touch panel display.

The present invention has been made in light of the circumstances described above and an object of the present invention is to provide a display control device, a thin client system, a display control method and a recording medium that improves the operability of window operation buttons displayed on the screen of a touch panel display.

### Solution to Problem

A display control device according to a first aspect of the present invention, the display control device being equipped with a touch panel display, characterized by includes:
screen display means for displaying an image including a window operation button for manipulating a window on a screen of the touch panel display;
operation recognition means for recognizing a contact point coordinate indicating a position in which a user has touched the screen of the touch panel display and a continuous touch duration in which the user has been in contact with the screen of the touch panel display;
icon display means for displaying an icon superimposed on the image on the screen of the touch panel display, the icon being an enlarged version of the window operation button and emulating the window operation button;
correspondence information storage means for storing correspondence information indicating a correspondence between the icon and the window operation button; and
event issuing means for, when the contact point coordinate at the start of a touch are within a display region of the icon and the continuous touch duration satisfies a predetermined condition on the basis of the contact point coordinate and the continuous touch duration, identifying a window operation button corresponding to the icon with reference to the correspondence information and generating event information indicating that the identified window operation button has been operated.

A thin client system according to a second aspect of the present invention, the thin client system being in which a server and a display control device equipped with a touch panel display are interconnected through a network,
characterized by the server includes screen transmission means for transmitting screen information indicating an image including a window operation button for manipulating a window to the display control device;
the display control device includes:
image receiving means for receiving the screen information from the server;
screen display means for displaying an image including the window operation button on a screen of the touch panel display on the basis of the screen information;
operation recognition means for recognizing a contact point coordinate indicating a position in which a user has touched the screen of the touch panel display and a continuous touch duration in which the user has been in contact with the screen of the touch panel display;
icon display means for displaying an icon superimposed on the image on the screen of the touch panel display, the icon being an enlarged version of the window operation button and emulating the window operation button;
correspondence information storage means for storing correspondence information indicating a correspondence between the icon and the window operation button;
event issuing means for, when the contact point coordinate at the start of a touch are within a display region of the icon and the continuous touch duration satisfies a predetermined condition on the basis of the contact point coordinate and the continuous touch duration, identifying a window operation button corresponding to the icon with reference to the correspondence information and generating event information indicating that the identified window operation button has been operated; and
event transmitting means for transmitting the event information generated by the event issuing means to the server; and
the server includes:
   action information storage means for storing action information indicating a correspondence between an event indicated by the event information and an action;
   event receiving means for receiving the event information from the display control device; and
   execution means for executing an action associated with an event indicated by the received event information with reference to the action information.
A display control method according to a third aspect of the present invention characterized by includes:
a screen display step of displaying an image including a window operation button for manipulating a window on a screen of a touch panel display;
an operation recognition step of recognizing a contact point coordinate indicating a position in which a user has touched the screen of the touch panel display and a continuous touch duration during which the user has been in contact with the screen of the touch panel display;
an icon display step of displaying an icon superimposed on the image on the screen of the touch panel display, the icon being an enlarged version of the window operation button and emulating the window operation button; and
an event issuing step of, when the contact point coordinate at the start of a touch are within a display region of the icon and the continuous touch duration satisfies a predetermined condition on the basis of the contact point coordinate and the continuous touch duration, identifying a window operation button corresponding to the icon with reference to stored correspondence information that indicates a correspondence between an icon and a window operation button, and generating event information indicating that the identified window operation button has been operated.

A display control method according to a forth aspect of the present invention, the display control method being in a thin client system in which a server and a display control device equipped with a touch panel display are interconnected through a network, characterized by includes:
a screen transmission step of transmitting, by the server, screen information indicating an image including a window operation button for manipulating a window to the display control device;
an image receiving step of receiving, by the display control device, the screen information from the server;
a screen display step of displaying, by the display control device, an image including the window operation button on a screen of the touch panel display on the basis of the screen information;
an operation recognition step of recognizing, by the display control device, a contact point coordinate indicating a position in which a user has touched the screen of the touch panel display and a continuous touch duration in which the user has been in contact with the screen of the touch panel display;
an icon display step of displaying, by the display control device, an icon superimposed on the image on the screen of the touch panel display, the icon being an enlarged version of the window operation button and emulating the window operation button;
an event issuing step of, when the contact point coordinate at the start of a touch are within a display region of the icon and the continuous touch duration satisfies a predetermined condition on the basis of the contact point coordinate and the continuous touch duration, identifying, by the display control device, a window operation button corresponding to the icon with reference to stored correspondence information that indicates a correspondence between an icon and a window operation button, and generating event information indicating that the identified window operation button has been operated;
an event transmission step of transmitting, by the display control device, the event information generated at the event issuing step to the server;
an event receiving step of receiving, by the server, the event information from the display control device; and
an execution step of executing, by the server, an action associated with an event indicated by the received event information with reference to stored action information that indicates a correspondence between an event indicated by the event information and an action.

A computer-readable recording medium according to a fifth aspect of the present invention, the computer-readable recording medium storing with a program, the program causing a computer equipped with a touch panel display to function as:
screen display means for displaying an image including a window operation button for manipulating a window on a screen of the touch panel display;
operation recognition means for recognizing contact point coordinate indicating a position in which a user has touched the screen of the touch panel display and a continuous touch duration in which the user has been in contact with the screen of the touch panel display;
icon display means for displaying an icon superimposed on the image on the screen of the touch panel display, the icon being an enlarged version of the window operation button and emulating the window operation button;
correspondence information storage means for storing correspondence information indicating a correspondence between the icon and the window operation button; and
event issuing means for, when the contact point coordinate at the start of a touch are within a display region of the icon and the continuous touch duration satisfies a predetermined condition on the basis of the contact point coordinate and the continuous touch duration, identifying a window operation button corresponding to the icon with reference to the correspondence information and generating event information indicating that the identified window operation button has been operated.

### Advantageous Effects of Invention

The present invention improves the operability of window operation buttons displayed on the screen of a touch panel display.

### Brief Description of Drawings

Fig. 1 is a diagram illustrating display of icons of a smart window manager according to a first exemplary embodiment of the present invention.
Fig. 2 is a block diagram illustrating an exemplary configuration of a display control device according to the first exemplary embodiment.
Fig. 3 is a diagram illustrating an operation input on the display control device according to the first exemplary embodiment.
Fig. 4 is a flowchart illustrating one example of an operation of the display control device according to the first exemplary embodiment.
Fig. 5 is a flowchart illustrating one example of an operation of a display control device according to a second exemplary embodiment of the present invention.
Fig. 6 is a block diagram illustrating an exemplary configuration of a thin client system according to a third exemplary embodiment of the present invention.
Fig. 7 is a block diagram illustrating an exemplary hardware configuration of a display control device according to an exemplary embodiment.

### Description of Embodiments

Exemplary embodiments of the present invention will be described below. In the following description, a display control application according to the present invention will be referred to as a smart window manager.

### (First Exemplary Embodiment)

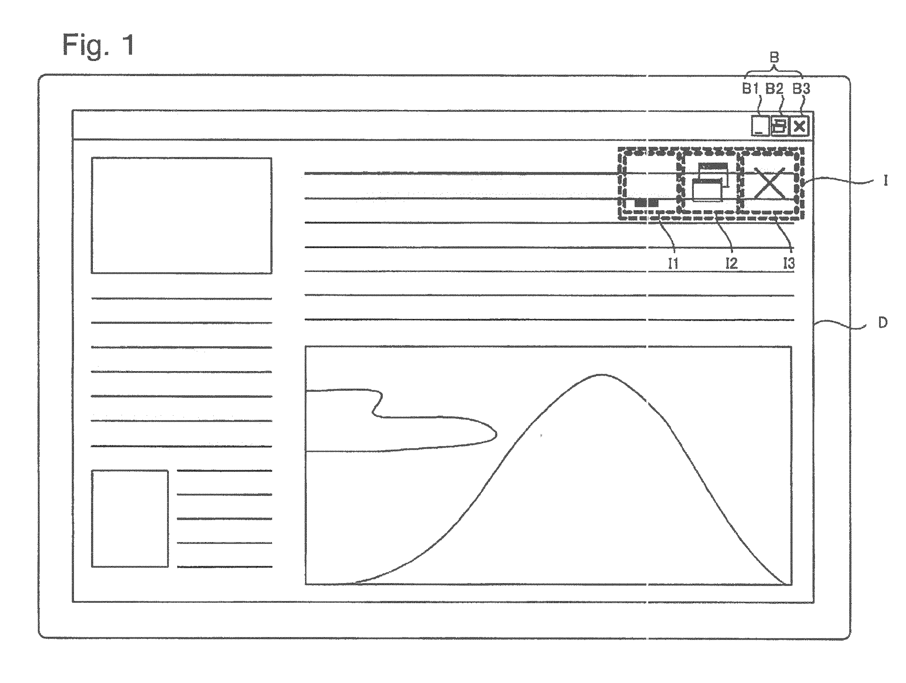

Fig. 1 is a diagram illustrating display of icons of a smart window manager according to a first exemplary embodiment of the present invention. A display control device 1 according to the first exemplary embodiment is equipped with a touch panel display D and displays a window including window operation buttons B. The window operation buttons B in the example in Fig. 1 includes a window minimizing button B1, maximizing button B2 and close button B3.

Assume here that the smart window manager is activated when the window including the window operation buttons B is displayed. Then the display control device 1 displays icons I of the smart window manager superimposed on an image displayed on a screen in a predetermined location of the touch panel display D. In a multiwindow display, the display control device 1 displays the icons I of the smart window manager on an active window (which is displayed at the top of the window stack).

The icons I of the smart window manager are translucently displayed. Displaying translucently means that pixels are computed and displayed so that the image on which the icons I are superimposed can be seen through the icons 1. The icons I are enlarged versions of the window operation buttons B and emulate the window operation buttons B. The icons I include an icon I1 corresponding to the minimizing button B1, an icon I2 corresponding to the maximizing button B2, and an icon I3 corresponding to the close button B3. Although the icons I are positioned near the frame like the window operation buttons B, the icons I are easier to press because the icons I are larger in size.

When any of the icons I is tapped, the display control device 1 inputs the same operation that would be input when the corresponding one of the window operation buttons B is tapped. Accordingly the user can input the same operation by tapping one of the icons I that corresponds to the window operation button B that the user wants to operate. Tapping means that the user touches a display region of interest in a manner that satisfies predetermined conditions and will be detailed later.

Note that the icons I of the smart window manager are not limited to the window minimizing button B1, maximizing button B2 and close button B3. Other icons such as browser resizing button, a back button, and a forward button, which are associated with the window operation buttons B, may be provided. In addition, an active window select icon (for example, an icon for selecting windows one after another, starting with the one at the forefront or the backmost icon) may be provided.

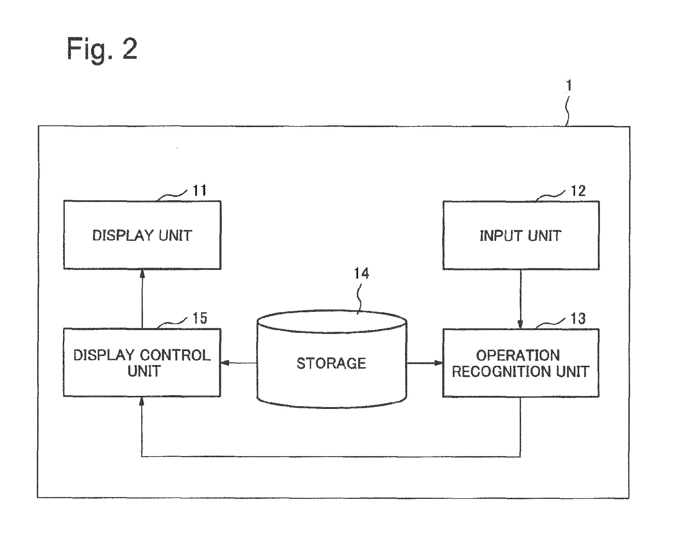

Fig. 2 is a block diagram illustrating an exemplary configuration of the display control device 1 according to the first exemplary embodiment. The display control device 1 includes a display unit 11, an input unit 12, an operation recognition unit 13, a storage 14 and a display control unit 15.

The display unit 11 is constituted by a liquid-crystal panel or the like and displays a screen as directed by the display control unit 15. The input unit 12 is constituted by a position input device, such as a touch pad, which is placed on a surface of the liquid-crystal panel constituting the display unit 11 and detects a touch. The input unit 12 accepts an input by a touch by a user. The display unit 11 and the input unit 12 are implemented by a touch panel display D.

The operation recognition unit 13 acquires the position on the touch panel display D where the input unit 12 has detected a touch. The operation recognition unit 13 then compares the coordinates of the acquired position on the touch panel display D with screen coordinate information indicating coordinates on the screen stored in the storage 14 to recognize the coordinates of the contact point. In addition, the operation recognition unit 13 recognizes the continuous touch duration from the start of a touch detected by the input unit 12 to the end of the touch. The operation recognition unit 13 sends the contact point coordinates and the continuous touch duration to the display control unit 15.

The display control unit 15 retrieves screen information indicating a window including window operation buttons B from the storage 14 and causes the display unit 11 to display the window.

Upon activation of the smart window manager, the display control unit 15 retrieves data indicating icons I of the smart window manager from the storage 14 and causes the icons I to be displayed in a predetermined position on the screen of the display unit 11. Since the icons I are displayed translucently, an image under the icons I can be seen through the icons I. Accordingly, the icons I displayed do not interfere with operations.

The user taps the icons I of the smart window manager on the touch panel display D to operate the window operation buttons B.

Based on contact point coordinates and a continuous touch duration received from the operation recognition unit 13, the display control unit 15 determines whether or not the user has tapped any of the icons I of the smart window manager.

In this exemplary embodiment, when the contact point coordinates at the start of a touch is within the display region of an icon I and the continuous touch duration is greater than or equal to a threshold α and less than or equal to a threshold β, it is determined that the icon I has been tapped. The provision of the threshold α can prevent a touch in a short continuous touch duration such as an unintentional touch by a user from being determined to be a tap. The provision of the threshold β allows the user to undo a touch of a wrong icon I by continuing touching for a long time.

In addition, a threshold may be provided for displacement from the contact point coordinates at the start of a touch to allow the user to undo an operation by moving from the touched position. Furthermore, whenever contact point coordinates at the start of a touch are within the display region of an icon I and the continuous touch duration is greater than or equal to 0, it may be determined that the icon I has been tapped.

When the display control unit 15 determines that the user has tapped an icon I, the display control unit 15 refers to correspondence information indicating the correspondences between the icons I and the window operation buttons B which is stored in the storage 14. The display control unit 15 identifies the window operation button B that corresponds to the tapped icon I. The display control unit 15 generates event information indicating that the identified window operation button B has been operated and issues an event.

Furthermore, the display control unit 15 refers to action information indicating the correspondences between events and actions that is stored in the storage 14 and executes the action associated with the issued event. Note that another function unit of the display control device 1, instead of the display control unit 15, may refer to the action information and execute the action associated with the issued event.

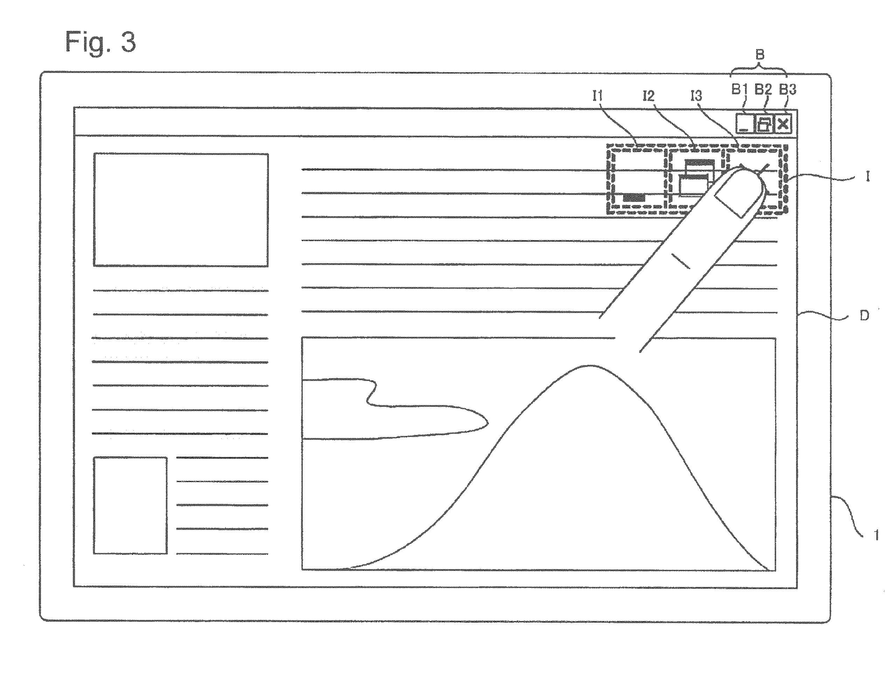

Fig. 3 is a diagram illustrating an operation input on the display control device 1 according to the first exemplary embodiment. Window operation buttons B in the example in Fig. 3 include a window minimizing button B1, maximizing button B2 and close button B3. Icons I that emulate the window operation buttons B include an icon I1 corresponding to the minimizing button B1, an icon I2 corresponding to the maximizing button B2 and an icon I3 corresponding to the close button B3.

When the window is maximized, the close button B3 is displayed in the upper right corner of the screen as illustrated in Fig. 3. When the user wants to operate the close button B3, the user activates the smart window manager to display the icons I. The user then taps the icon I3 to input the same operation as an operation input when the close button B3 is tapped. Since the icon I3 is an enlarged version of the close button B3 and is larger than the close button B3, the icon I3 is easier for the user to tap even though the icon I3 is located near the frame.

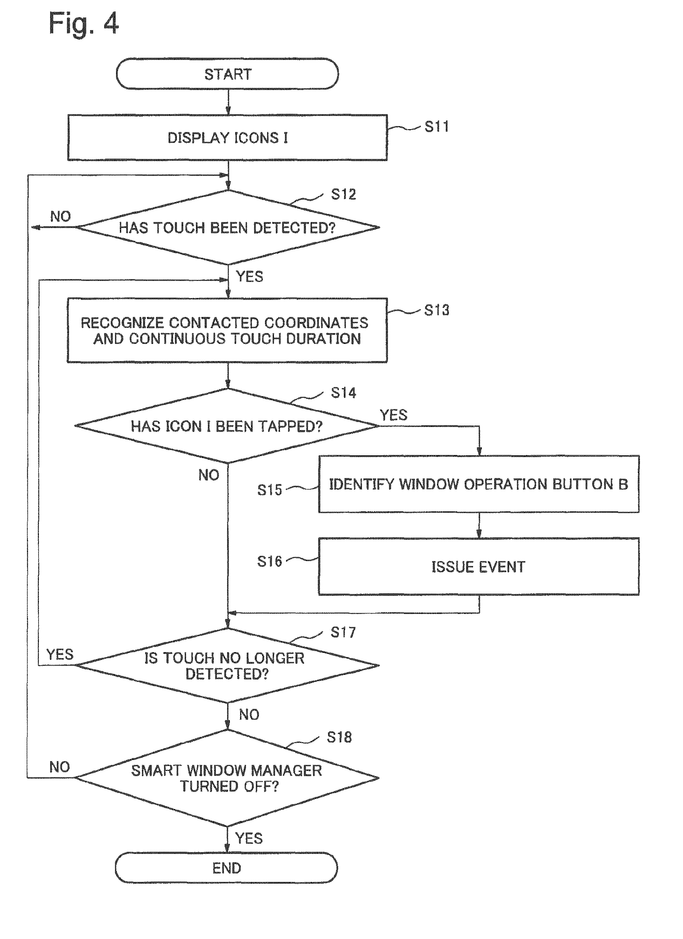

Fig. 4 is a flowchart illustrating an example of an operation of the display control device 1 according to the first exemplary embodiment. The process illustrated in the flowchart in Fig. 4 starts when the user activates the smart window manager. The display control unit 15 retrieves data indicating the icons I of the smart window manager from the storage 14. The display control unit 15 then displays the icons I superimposed on an image displayed on the screen of the display unit 11 in a predetermined location (step S11).

When the input unit 12 detects a touch (step S12: YES), the operation recognition unit 13 acquires the position on the touch panel display D where the input unit 12 has detected the touch and compares the position with screen coordinate information stored in the storage 14 to recognize contact point coordinates and a continuous touch duration (step S13). The operation recognition unit 13 sends the contact point coordinates and the continuous touch duration to the display control unit 15. When the input unit 12 does not detect a touch (step S12: NO), the input unit 12 repeats step S12.

Based on the contact point coordinates and the continuous touch duration received from the operation recognition unit 13, the display control unit 15 determines whether or not any of the icons I of the smart window manager has been tapped (step S 14). When any of the icons I has been tapped (step S 14: YES), the display control unit 15 compares the tapped icon I with correspondence information stored in the storage 14 to identify the window operation button B that corresponds to the tapped icon I (step S 15).

The display control unit 15 generates event information indicating that the identified window operation button B has been operated, issues an event (step S16), and proceeds to step S17. The display control unit 15 refers to action information and executes the action associated with the issued event.

On the other hand, when none of the icons I have been tapped (step S 14: NO), step S 13 to step S 17 are repeated, while the input unit 12 is detecting the touch (step S 17: NO). When the input unit 12 no longer detects the touch (step S 17: YES), determination is made as to whether or not the smart window manager is turned off (step S18). When the smart window manager is not turned off (step S18: NO), step S12 to step S18 are repeated. When the smart window manager is turned off (step S18: YES), the process ends.

In the display control device 1 according to the first exemplary embodiment, the icons I that emulate the window operation buttons B displayed on the screen of the touch panel display D are enlarged versions of the window operation buttons B. Accordingly, the user can easily operate the window operation buttons B by operating the icons I which are large in size.

### (Second Exemplary Embodiment)

A display control device 1 according to a second exemplary embodiment has a configuration similar to that of the display control device 1 according to the first exemplary embodiment. In the second exemplary embodiment, icons I of a smart window manager can be freely moved by dragging the icons I.

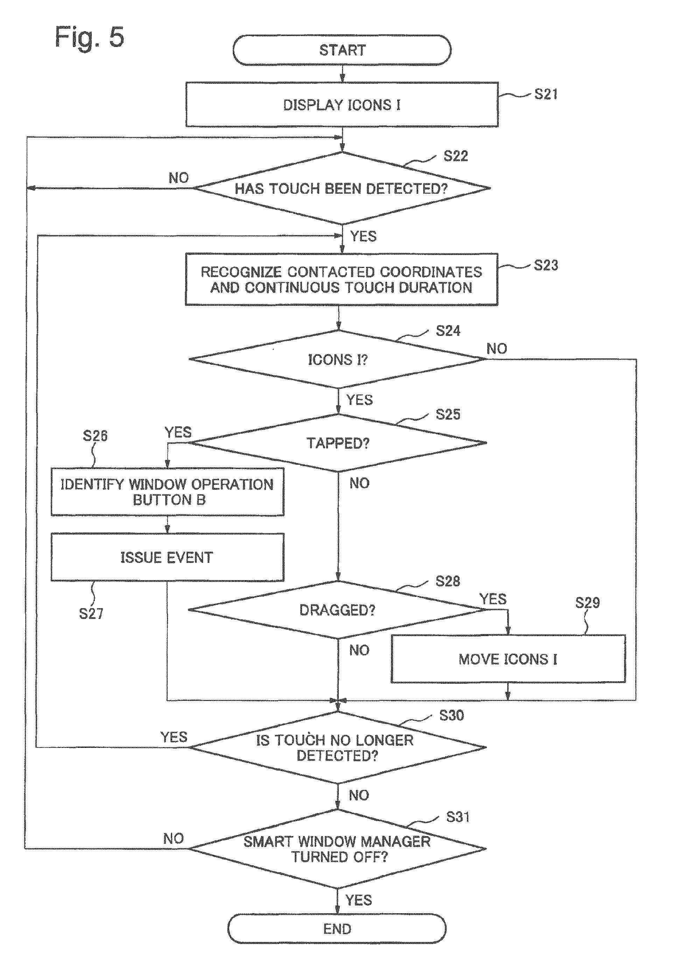

Fig. 5 is a flowchart illustrating an example of an operation of the display control device 1 according to the second exemplary embodiment of the present invention. The process illustrated in the flowchart in Fig. 5 starts when a user activates the smart window manager. A display control unit 15 retrieves data indicating the icons I of the smart window manager from a storage 14. The display control unit 15 displays the icons I superimposed on an image displayed on a screen of a display unit 11 in a predetermined location (step S21).

When the input unit 12 detects a touch (step S22: YES), the operation recognition unit 13 acquires the position on the touch panel display D where the input unit 12 has detected the touch and compares the position with screen coordinate information stored in the storage 14 to recognize contact point coordinates and a continuous touch duration (step S23). The operation recognition unit 13 sends the contact point coordinates and the continuous touch duration to the display control unit 15. When the input unit 12 does not detect a touch (step S22: NO), the input unit 12 repeats step S22.

The display control unit 15 determines whether or not the contact point coordinates received from the operation recognition unit 13 are included in the display region of the icons I of the smart window manager (step S24). If the contact point coordinates are not included in the display region of the icons I (step S24: NO), the display control unit 15 proceeds to step S30.

If the contact point coordinates are included in the display region of the icons I (step S24: YES), the display control unit 15 determines, based on the continuous touch duration received from the operation recognition unit 13, whether or not any of the icons I has been tapped (step S25). When any of the icons I has been tapped (step S25: YES), the display control unit 15 compares the tapped icon I with correspondence information stored in the storage 14 to identify the window operation button B that corresponds to the tapped icon I (step S26). The display control unit 15 determines that any of the icons I has been tapped if the contact point coordinates at the start of the touch is within the display region of the icons I and a displacement from the contact point coordinates at the start of the touch is less than or equal to a threshold γ.

The display control unit 15 generates event information indicating that the identified window operation button B has been operated, issues an event (step S27), and proceeds to step S30. The display control unit 15 refers to action information and executes the action associated with the issued event.

On the other hand, if none of the icons I have been tapped (step S25: NO), the display control unit 15 determines, based on the continuous touch duration received from the operation recognition unit 13, whether or not the icons I have been dragged (step S28). If the icons I have been dragged (step S28: YES), the display control unit 15 moves the icons I to the position of the changed contact point coordinates (step S29) and proceeds to step S30. When the contact point coordinates at the start of the touch is within the display region of the icons I and a displacement from the contact point coordinates at the start of the touch is greater than the threshold γ, the display control unit 15 determines that the icons I have been dragged.

If the icons I have not been dragged (step S28: NO), the input unit 12 repeats step S23 to step S30 while the touch is being detected (step S30: NO). When the touch is no longer detected (step S30: YES), the input unit 12 determines whether or not the smart window manager is turned off (step S31). If the smart window manager is not turned off (step S31: NO), the step S22 to step S31 are repeated. When the smart window manager is turned off (step S31: YES), the process ends.

According to the display control device 1 in the second exemplary embodiment, the icons I that emulate the window operation buttons B displayed on the screen of the touch panel display D are enlarged version of the window operation buttons B and can be placed in any position. Accordingly, the user can easily operate the window operation buttons B by operating the icons I which are in any position and large in size.

According to this exemplary embodiment, when the contact point coordinates at the start of a touch is within the display region of the icons I and a displacement from the contact point coordinates at the start of the touch is less than or equal to the threshold γ, it is determined that any of the icons I has been tapped; when the displacement is greater than the threshold γ, it is determined that the icons I have been dragged. However, the present invention is not so limited. The threshold for determining that the icons I have been tapped and the threshold for determining that the icons I have been dragged may be different from each other. Furthermore, whenever the contact point coordinates at the start of a touch is within the display region of the icons I, it may be determined that the icons I have been tapped. Moreover, whenever the contact point coordinates at the start of a touch is within the display region of the icons I and the contact point coordinates have changed during the continuous touch on the icons I, it may be determined that the icons I have been dragged.

### (Third Exemplary Embodiment)

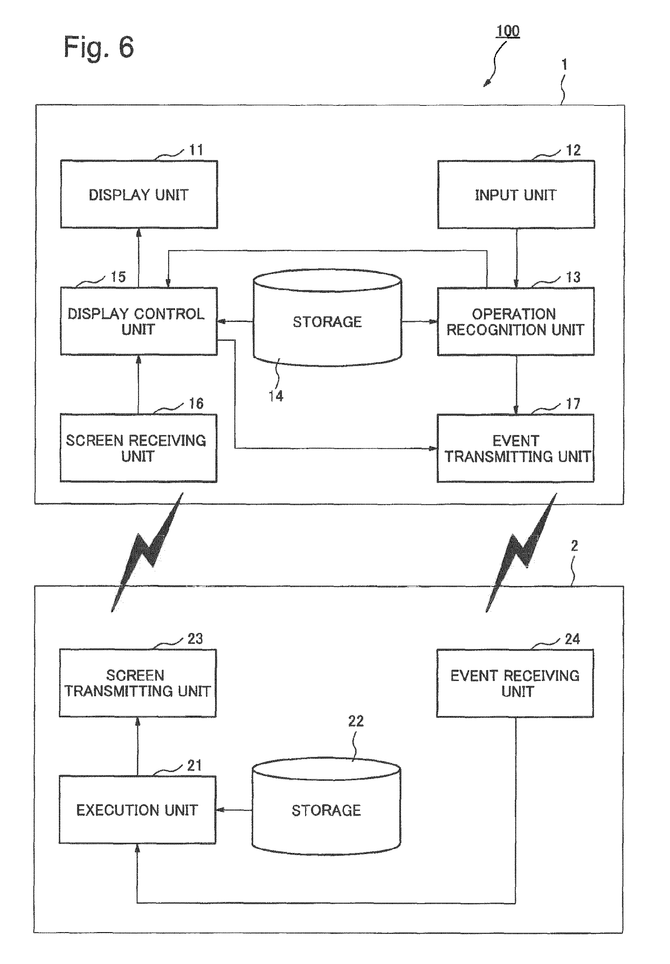

Fig. 6 is a block diagram illustrating an exemplary configuration of a thin client system 100 according to a third exemplary embodiment of the present invention. The thin client system 100 is made up of a display control device 1 and a server 2. The display control device 1 includes a display unit 11, an input unit 12, an operation recognition unit 13, a storage 14, a display control unit 15, a screen receiving unit 16 and an event transmitting unit 17. The server 2 includes an execution unit 21, a storage 22, a screen transmitting unit 23 and an event receiving unit 24.

Separate symbols indicating communications of the screen receiving unit 16 and the event transmitting unit 17 of the display control device 1 with the screen transmitting unit 23 and the event receiving unit 24, respectively, of the server 2 are depicted. However, in reality, the same communication devices communicate with each other.

The display unit 11, the input unit 12, the operation recognition unit 13 and the storage 14 of the display control device 1 have the same configurations as those of the first exemplary embodiment. The screen receiving unit 16 receives screen information indicating a window including window operation buttons B from the screen transmitting unit 23 of the server 2. The display control unit 15 of this exemplary embodiment causes a window including the window operation buttons B to be displayed on the display unit 11 on the basis of screen information received by the screen receiving unit 16.

The display control unit 15 determines, based on contact point coordinates and a continuous touch duration received from the operation recognition unit 13, whether or not a user has tapped an icon I of the smart window manager. When the display control unit 15 determines that the user has tapped the icons I, the display control unit 15 refers to correspondence information indicating the correspondences between icons I and the window operation buttons B that is stored in the storage 14 to identify the window operation button B that corresponds to the tapped icon I. The display control unit 15 generates event information indicating that the identified window operation button B has been operated and issues an event.

The display control unit 15 sends the generated event information to the event transmitting unit 17. The event transmitting unit 17 transmits the event information received from the display control unit 15 to the event receiving unit 24 of the server 2.

The execution unit 21 of the server 2 retrieves screen information indicating a window including the window operation buttons B from the storage 22 and sends the screen information to the image transmitting unit 23 to cause the screen transmitting unit 23 to transmit the screen information to the screen receiving unit 16 of the display control device 1.

The event receiving unit 24 receives event information from the event transmitting unit 17 of the display control device 1 and sends the event information to the execution unit 21. The execution unit 21 refers to action information indicating the correspondences between events and actions that is stored in the storage 22 and executes the action that corresponds to the received event information. The execution unit 21 retrieves screen information indicating an action screen of the executed action from the storage 22 and sends the screen information to the image transmitting unit 23 to cause the image transmitting unit 23 to transmit the screen information to the screen receiving unit 16 of the display control device 1.

When the screen receiving unit 16 of the display control device 1 receives the screen information indicating the action screen from the screen transmitting unit 23 of the server 2, the display control unit 15 causes the action screen to be displayed on the display unit 11 on the basis of the screen information received by the screen receiving unit 16.

The display control device 1 of the second exemplary embodiment as well as the display control device 1 of the first exemplary embodiment can constitute a thin client system 100.

In the third exemplary embodiment, the display control device 1 identifies the window operation button B that corresponds to a tapped icon I on the basis of contact point coordinates and a continuous touch duration. The display control device 1 then generates event information indicating that the identified window operation button B has been operated and issues an event. However, the present invention is not so limited.

The display control device 1 transmits the contact point coordinates and the continuous touch duration to the server 2 and the server 2 identifies the window operation button B that corresponds to the tapped icon I on the basis of the contact point coordinates and the continuous touch duration. The server 2 may generate event information indicating that the identified window operation button B has been operated and may issue an event.

In the thin client system 100 according to the third exemplary embodiment, the load on the display control device 1 is reduced because actions are executed on the server 2. This enables reduction in the cost and size of the display control device 1.

If the server 2 in the thin client system 100 is equipped with a display, a screen for the display of the server 2 is displayed on the touch panel display D of the display control device 1. If the touch panel display D of the display control device 1 is smaller than the display of the server 2, the screen is reduced in size and the reduced screen is displayed on the touch panel display D. Accordingly, the window operation buttons B in a corner of a window is reduced in size and can be further difficult to operate. Applying the present invention to the thin client system has the effect of improving the operability of the window operation buttons B displayed on the screen of the touch panel display D.

Note that while the user directly touch an icon I of the smart window manager with a finger to operate the icon I in the embodiments described above, an embodiment may be configured in which the user points to an icon I with a pointer. While the icons I are translucently displayed in the embodiments described above, the icons I may be icons through which an image under the icons cannot be seen.

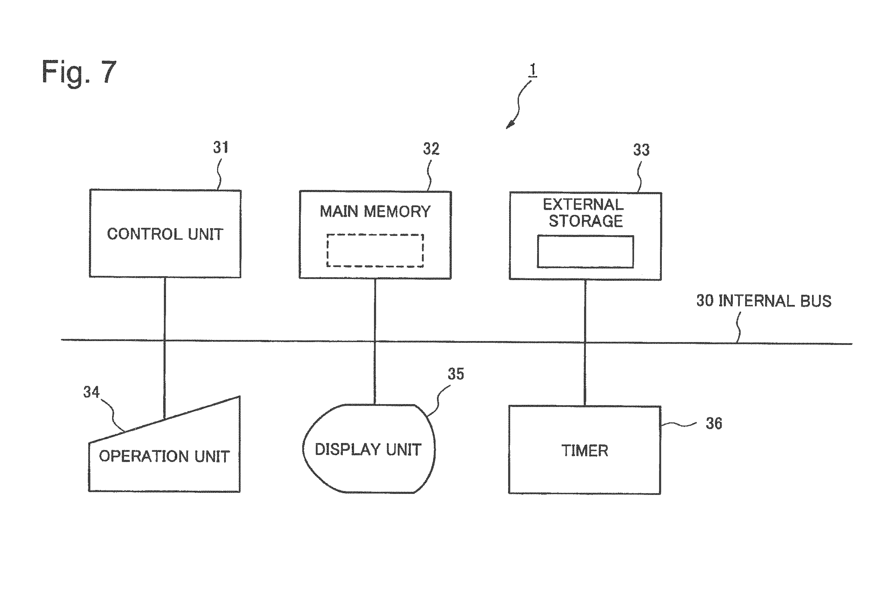

Fig. 7 is a block diagram illustrating an exemplary hardware configuration of a display control device 1 according to an embodiment.

A control unit 31 is constituted by a CPU (Central Processing Unit) or the like. The control unit 31 executes processes of the operation recognition unit 13 and the display control unit 15 according to a control program 39 stored in an external storage 33.

The main memory 32 is constituted by a RAM (Random-Access Memory) or the like. The control program 39 stored in the external storage 33 is loaded into the main memory 32, which is used by the control unit 31 as a work area.

The external storage 33 is constituted by a nonvolatile memory such as a flash memory, a hard disk, a DVD-RAM (Digital Versatile Disc Random-Access Memory), or a DVD-RW (Digital Versatile Disc ReWritable). The external storage 33 stores beforehand a program for causing the control unit 31 to perform processes of the display control device 1. The external storage 33 provides data stored by the program to the control unit 31 according to instructions from the control unit 31 and stores data provided from the control unit 31. The storage 14 is constituted by the external storage 33.

An operation unit 34 is constituted by an interface device that connects a position input device such as a touch pad to an internal bus 30. When a user performs an operation input, an instruction is provided to the control unit 31 through the operation unit 34. The operation unit 34 functions as the input unit 12.

A display unit 35 is constituted by a CRT (Cathode Ray tube), an LCD (Liquid Crystal Display) or the like and displays application screens and the like. The display unit 35 functions as the display unit 11.

A timer 36 provides the current time to the control unit 31 via the internal bus 30 at regular intervals. The control unit 31 recognizes a continuous touch duration on the basis of the current time provided from the timer 36.

Note that the display control device 1 in a thin client system 100 further includes a communication unit constituted by network terminal equipment or radio communication equipment connecting to a network, and a serial interface or a LAN (Local Area Network) interface that connects to the equipment. The communication unit connects to the server 2 through the network. The communication unit functions as the screen receiving unit 16 and the event transmitting unit 17.

The processes performed by the display unit 11, the input unit 12, the operation recognition unit 13, the storage 14 and the display control unit 15 illustrated in Fig. 2 are accomplished by the control program 39 using the control unit 31, the main memory 32, the external storage 33, the operation unit 34, the display unit 35 and the timer 36 as resources to perform processing.

The hardware configurations and the flowcharts described above are illustrative only and changes and modification can be made as appropriate.

The core part that is constituted by the control unit 31, the main memory 32, the external storage 33, the internal bus 30 and the like and performs control processing can be implemented by a conventional computer system instead of a specialized system. For example, a computer program for executing the operations described above may be stored on a computer-readable recording medium (such as a flexible disk, a CD-ROM, a DVD-ROM or the like) and distributed. Then the distributed computer program may be installed in a computer to configure the display control device 1 that executes the processes described above. Alternatively, the computer program may be stored in a storage device of a server device on a communication network such as the Internet and may be downloaded to a conventional computer system to configure the display control device 1.

If the functions of the display control device 1 are implemented by sharing or cooperation between an OS and an application program, the application program alone may be stored on a recording medium or a storage device.

Furthermore, the computer program may be superimposed on a carrier wave and distributed through a communication network. For example, the computer program may be posted on a BBS (Bulletin Board System) on a communication network and may be distributed through the network. Then the computer program may be activated and executed under the control of an OS in the same way as other application programs are executed so that the processes described above can be executed.

Various embodiments and variations of the present invention are possible without departing from the broad spirit and scope of the present invention. The exemplary embodiments described above are illustrative of the present invention and are not intended to limit the scope of the present invention. In other words, the scope of the present invention is defined by the claims and not by the exemplary embodiments. Various variations made within the scope of the claims and within the meaning of the present invention that is equivalent to the claims are considered to fall within the scope of the present invention.

Some or all of the exemplary embodiments described above can be set forth as in the following supplementary notes but the present invention is not limited thereto.

### (Supplementary Note 1)

A display control device equipped with a touch panel display, the display control device characterized by including:
screen display means for displaying an image including a window operation button for manipulating a window on a screen of the touch panel display;
operation recognition means for recognizing a contact point coordinate indicating a position in which a user has touched the screen of the touch panel display and a continuous touch duration in which the user has been in contact with the screen of the touch panel display;
icon display means for displaying an icon superimposed on the image on the screen of the touch panel display, the icon being an enlarged version of the window operation button and emulating the window operation button;
correspondence information storage means for storing correspondence information indicating a correspondence between the icon and the window operation button; and
event issuing means for, when the contact point coordinate at the start of a touch are within a display region of the icon and the continuous touch duration satisfies a predetermined condition on the basis of the contact point coordinate and the continuous touch duration, identifying a window operation button corresponding to the icon with reference to the correspondence information and generating event information indicating that the identified window operation button has been operated.

### (Supplementary Note 2)

The display control device according to Supplementary Note 1, characterized by the predetermined condition is that the continuous touch duration is greater than or equal to a predetermined threshold duration.

### (Supplementary Note 3)

The display control device according to Supplementary Notes 1 or 2, characterized by, when the contact point coordinate at the start of a touch is within the display region of the icon and the contact point coordinate is changed while the touch is continuously maintained on the basis of the contact point coordinate and the continuous touch duration, the icon display means moves the display position of the icon to the position at the changed contact point coordinate.

### (Supplementary Note 4)

The display control device according to any one of Supplementary Notes 1 to 3, characterized in that the icon display means translucently displays the icon.

### (Supplementary Note 5)

A thin client system in which a server and a display control device equipped with a touch panel display are interconnected through a network,
characterized by the server includes screen transmission means for transmitting screen information indicating an image including a window operation button for manipulating a window to the display control device;
the display control device includes:
image receiving means for receiving the screen information from the server;
screen display means for displaying an image including the window operation button on a screen of the touch panel display on the basis of the screen information;
operation recognition means for recognizing a contact point coordinate indicating a position in which a user has touched the screen of the touch panel display and a continuous touch duration in which the user has been in contact with the screen of the touch panel display;
icon display means for displaying an icon superimposed on the image on the screen of the touch panel display, the icon being an enlarged version of the window operation button and emulating the window operation button;
correspondence information storage means for storing correspondence information indicating a correspondence between the icon and the window operation button;
event issuing means for, when the contact point coordinate at the start of a touch are within a display region of the icon and the continuous touch duration satisfies a predetermined condition on the basis of the contact point coordinate and the continuous touch duration, identifying a window operation button corresponding to the icon with reference to the correspondence information and generating event information indicating that the identified window operation button has been operated; and
event transmitting means for transmitting the event information generated by the event issuing means to the server; and
the server includes:
   action information storage means for storing action information indicating a correspondence between an event indicated by the event information and an action;
   event receiving means for receiving the event information from the display control device; and
   execution means for executing an action associated with an event indicated by the received event information with reference to the action information.

### (Supplementary Note 6)

A display control method characterized by including:
a screen display step of displaying an image including a window operation button for manipulating a window on a screen of a touch panel display;
an operation recognition step of recognizing a contact point coordinate indicating a position in which a user has touched the screen of the touch panel display and a continuous touch duration during which the user has been in contact with the screen of the touch panel display;
an icon display step of displaying an icon superimposed on the image on the screen of the touch panel display, the icon being an enlarged version of the window operation button and emulating the window operation button; and
an event issuing step of, when the contact point coordinate at the start of a touch are within a display region of the icon and the continuous touch duration satisfies a predetermined condition on the basis of the contact point coordinate and the continuous touch duration, identifying a window operation button corresponding to the icon with reference to stored correspondence information that indicates a correspondence between an icon and a window operation button, and generating event information indicating that the identified window operation button has been operated.

### (Supplementary Note 7)

A display control method for a thin client system in which a server and a display control device equipped with a touch panel display are interconnected through a network, characterized by the display control method including:
a screen transmission step of transmitting, by the server, screen information indicating an image including a window operation button for manipulating a window to the display control device;
an image receiving step of receiving, by the display control device, the screen information from the server;
a screen display step of displaying, by the display control device, an image including the window operation button on a screen of the touch panel display on the basis of the screen information;
an operation recognition step of recognizing, by the display control device, a contact point coordinate indicating a position in which a user has touched the screen of the touch panel display and a continuous touch duration in which the user has been in contact with the screen of the touch panel display;
an icon display step of displaying, by the display control device, an icon superimposed on the image on the screen of the touch panel display, the icon being an enlarged version of the window operation button and emulating the window operation button;
an event issuing step of, when the contact point coordinate at the start of a touch are within a display region of the icon and the continuous touch duration satisfies a predetermined condition on the basis of the contact point coordinate and the continuous touch duration, identifying, by the display control device, a window operation button corresponding to the icon with reference to stored correspondence information that indicates a correspondence between an icon and a window operation button, and generating event information indicating that the identified window operation button has been operated;
an event transmission step of transmitting, by the display control device, the event information generated at the event issuing step to the server;
an event receiving step of receiving, by the server, the event information from the display control device; and
an execution step of executing, by the server, an action associated with an event indicated by the received event information with reference to stored action information that indicates a correspondence between an event indicated by the event information and an action.

### (Supplementary Note 8)

A computer-readable recording medium stored with a program, the program causing a computer equipped with a touch panel display to function as:
screen display means for displaying an image including a window operation button for manipulating a window on a screen of the touch panel display;
operation recognition means for recognizing contact point coordinate indicating a position in which a user has touched the screen of the touch panel display and a continuous touch duration in which the user has been in contact with the screen of the touch panel display;
icon display means for displaying an icon superimposed on the image on the screen of the touch panel display, the icon being an enlarged version of the window operation button and emulating the window operation button;
correspondence information storage means for storing correspondence information indicating a correspondence between the icon and the window operation button; and
event issuing means for, when the contact point coordinate at the start of a touch are within a display region of the icon and the continuous touch duration satisfies a predetermined condition on the basis of the contact point coordinate and the continuous touch duration, identifying a window operation button corresponding to the icon with reference to the correspondence information and generating event information indicating that the identified window operation button has been operated.

The present invention is based upon Japanese Patent Application No. 2012-192639 filed on 31 August, 2012. The entire contents of the specification, claims, and drawings of Japanese Patent Application No. 2012-192639 are incorporated herein by reference.

### Reference signs List

- 1: Display control device
- 2: Server
- 11: Display unit
- 12: Input unit
- 13: Operation recognition unit
- 14: Storage
- 15: Display control unit
- 16: Screen receiving unit
- 17: Event transmitting unit
- 21: Execution unit
- 22: Storage
- 23: Screen transmitting unit
- 24: Event receiving unit
- 30: Internal bus
- 31: Control unit
- 32: Main memory
- 33: External storage
- 34: Operation unit
- 35: Display unit
- 36: Timer
- 39: Control program
- 100: Thin client system
- B: Window operation button
- B1: Minimizing button
- B2: Maximizing button
- B3: Close button
- D: Touch panel display
- I, I1, I2, I3: Icon

## Claims

1. A display control device equipped with a touch panel display, **characterized by** the display control device comprising:
screen display means for displaying an image including a window operation button for manipulating a window on a screen of the touch panel display;
operation recognition means for recognizing a contact point coordinate indicating a position in which a user has touched the screen of the touch panel display and a continuous touch duration in which the user has been in contact with the screen of the touch panel display;
icon display means for displaying an icon superimposed on the image on the screen of the touch panel display, the icon being an enlarged version of the window operation button and emulating the window operation button;
correspondence information storage means for storing correspondence information indicating a correspondence between the icon and the window operation button; and
event issuing means for, when the contact point coordinate at the start of a touch are within a display region of the icon and the continuous touch duration satisfies a predetermined condition on the basis of the contact point coordinate and the continuous touch duration, identifying a window operation button corresponding to the icon with reference to the correspondence information and generating event information indicating that the identified window operation button has been operated.

2. The display control device according to Claim 1, **characterized in that** the predetermined condition is that the continuous touch duration is greater than or equal to a predetermined threshold duration.

3. The display control device according to Claim 1 or 2, **characterized in that**, when the contact point coordinate at the start of a touch is within the display region of the icon and the contact point coordinate is changed while the touch is continuously maintained on the basis of the contact point coordinate and the continuous touch duration, the icon display means moves the display position of the icon to the position at the changed contact point coordinate.

4. The display control device according to any one of Claims 1 to 3, **characterized in that** the icon display means translucently displays the icon.

5. A thin client system in which a server and a display control device equipped with a touch panel display are interconnected through a network, **characterized by** the server comprises
screen transmission means for transmitting screen information indicating an image including a window operation button for manipulating a window to the display control device;
the display control device comprises:
image receiving means for receiving the screen information from the server;
screen display means for displaying an image including the window operation button on a screen of the touch panel display on the basis of the screen information;
operation recognition means for recognizing a contact point coordinate indicating a position in which a user has touched the screen of the touch panel display and a continuous touch duration in which the user has been in contact with the screen of the touch panel display;
icon display means for displaying an icon superimposed on the image on the screen of the touch panel display, the icon being an enlarged version of the window operation button and emulating the window operation button;
correspondence information storage means for storing correspondence information indicating a correspondence between the icon and the window operation button;
event issuing means for, when the contact point coordinate at the start of a touch are within a display region of the icon and the continuous touch duration satisfies a predetermined condition on the basis of the contact point coordinate and the continuous touch duration, identifying a window operation button corresponding to the icon with reference to the correspondence information and generating event information indicating that the identified window operation button has been operated; and
event transmitting means for transmitting the event information generated by the event issuing means to the server; and
the server comprises:
action information storage means for storing action information indicating a correspondence between an event indicated by the event information and an action;
event receiving means for receiving the event information from the display control device; and
execution means for executing an action associated with an event indicated by the received event information with reference to the action information.

6. A display control method **characterized by** comprising:
a screen display step of displaying an image including a window operation button for manipulating a window on a screen of a touch panel display;
an operation recognition step of recognizing a contact point coordinate indicating a position in which a user has touched the screen of the touch panel display and a continuous touch duration during which the user has been in contact with the screen of the touch panel display;
an icon display step of displaying an icon superimposed on the image on the screen of the touch panel display, the icon being an enlarged version of the window operation button and emulating the window operation button; and
an event issuing step of, when the contact point coordinate at the start of a touch are within a display region of the icon and the continuous touch duration satisfies a predetermined condition on the basis of the contact point coordinate and the continuous touch duration, identifying a window operation button corresponding to the icon with reference to stored correspondence information that indicates a correspondence between an icon and a window operation button, and generating event information indicating that the identified window operation button has been operated.

7. A display control method for a thin client system in which a server and a display control device equipped with a touch panel display are interconnected through a network, **characterized by** the display control method comprising:
a screen transmission step of transmitting, by the server, screen information indicating an image including a window operation button for manipulating a window to the display control device;
an image receiving step of receiving, by the display control device, the screen information from the server;
a screen display step of displaying, by the display control device, an image including the window operation button on a screen of the touch panel display on the basis of the screen information;
an operation recognition step of recognizing, by the display control device, a contact point coordinate indicating a position in which a user has touched the screen of the touch panel display and a continuous touch duration in which the user has been in contact with the screen of the touch panel display;
an icon display step of displaying, by the display control device, an icon superimposed on the image on the screen of the touch panel display, the icon being an enlarged version of the window operation button and emulating the window operation button;
an event issuing step of, when the contact point coordinate at the start of a touch are within a display region of the icon and the continuous touch duration satisfies a predetermined condition on the basis of the contact point coordinate and the continuous touch duration, identifying, by the display control device, a window operation button corresponding to the icon with reference to stored correspondence information that indicates a correspondence between an icon and a window operation button, and generating event information indicating that the identified window operation button has been operated;
an event transmission step of transmitting, by the display control device, the event information generated at the event issuing step to the server;
an event receiving step of receiving, by the server, the event information from the display control device; and
an execution step of executing, by the server, an action associated with an event indicated by the received event information with reference to stored action information that indicates a correspondence between an event indicated by the event information and an action.

8. A computer-readable recording medium stored with a program, the program causing a computer equipped with a touch panel display to function as:
screen display means for displaying an image including a window operation button for manipulating a window on a screen of the touch panel display;
operation recognition means for recognizing contact point coordinate indicating a position in which a user has touched the screen of the touch panel display and a continuous touch duration in which the user has been in contact with the screen of the touch panel display;
icon display means for displaying an icon superimposed on the image on the screen of the touch panel display, the icon being an enlarged version of the window operation button and emulating the window operation button;
correspondence information storage means for storing correspondence information indicating a correspondence between the icon and the window operation button; and
event issuing means for, when the contact point coordinate at the start of a touch are within a display region of the icon and the continuous touch duration satisfies a predetermined condition on the basis of the contact point coordinate and the continuous touch duration, identifying a window operation button corresponding to the icon with reference to the correspondence information and generating event information indicating that the identified window operation button has been operated.
